# EUROPEAN PATENT SPECIFICATION

(11) **EP 3 164 629 B1**
(45) Date of publication and mention of the grant of the patent: **10.04.2019**
(21) Application number: 15732274.4
(22) Date of filing: 30.06.2015
(51) Int. Cl.: F16K 41/04, F16K 1/36, F25J 3/00

(54) **SHUT-OFF VALVE FOR LIQUIFIED NATURAL GAS**
ABSPERRVENTIL FÜR FLÜSSIGES ERDGAS
SOUPAPE D'ARRÊT POUR GAZ NATUREL LIQUÉFIÉ

(30) Priority: 04.07.2014 LU 92493
(43) Date of publication of application: 10.05.2017
(73) Proprietor: Luxembourg Patent Company S.A., 7440 Lintgen (LU)
(72) Inventor: BROECHLER, Johan, 54190 Villerupt (FR); CHIR, Pascal, F-57950 Montigny-lès-Metz (FR); SCHMITZ, Jean-Claude, L-7340 Heisdorf (LU)
(74) Representative: Lecomte & Partners
(86) International application number: PCT/EP2015/064885
(87) International publication number: WO 2016/001247

(56) References cited:
- CN-U- 202 140 576
- US-A- 3 048 362

## Description

### Technical field

The invention is directed to a valve for pressurized gas, more particularly for pressurized gas operating at low temperature like liquefied natural gas (LNG).

### Background art

Prior art patent document published CN 202140576 U discloses a low-temperature shut-off valve according to the preamble of claim 1, comprising a body with a gas inlet, a gas outlet and gas passage between the inlet and outlet, a hand wheel and shut-off device in the valve body for closing the gas passage by operating the hand wheel. The shut-off device comprises a movable closure member that is in threaded engagement with the body. A spindle supporting the hand wheel rotatably engages with the movable closure member. The spindle comprises a shoulder abutting against a corresponding shoulder on a cap portion of the body. A first gasket is provided between the shoulder of the spindle and the corresponding shoulder of the cap portion. This first gasket is ring shaped with a L-shaped cross-section. A portion of the gasket extends between the external surface of the spindle and the internal surface of the body. A second gasket is arranged around the spindle at a location that is more distal from the shut-off device. This second gasket is housed in the cap portion and is pressed by a sleeve that is in contact with the hand wheel via a sliding washer. The hand wheel is able to slide along the spindle and a spring is arranged between a distal end of the spindle and the hand wheel so as to press it towards the valve body. This urging force is transmitted to the sleeve via the sliding washer. This force is then further transmitted to the second gasket for pressing it against the external surface of the spindle.

During operation of the above valve at low temperature, e.g. at less than -100°C and even less than -150°C, as is usual with LNG, the gaskets made of elastomer become hard and frictional movement against them can produce elastomer particles. These particles can accumulate inside the valve and increase the torque necessary for operating it. Such valves require already a relatively high torque for operating them due essentially to the low temperatures and the resulting high stiffness of the gaskets. Any sensible increase in the operating torque is to be avoided.

### Summary of invention

### Technical Problem

The invention has for technical problem to provide a valve that overcome at least one of the drawbacks of the above mentioned prior art. More particularly, the invention has for technical problem to provide a valve that is suitable for gases at low temperatures, e.g. below -100°C, while keeping a reduced operating torque and being gas tight.

### Technical solution

The invention is directed to a valve for gas under pressure, in particular at temperatures below -100°C, comprising: a body with a gas inlet, a gas outlet and a passage connecting said inlet with said outlet; a shut-off device for closing the gas passage; a spindle designed for operating the shut-off device; a first gasket and a second gasket, between the spindle and the body; a first cavity between the first and second gaskets; wherein the first cavity is shaped as a groove on the external surface of the spindle for accumulating particles separated from the second gasket while operating the spindle and the shut-off device, in particular at temperatures below -100°C.

According to a preferred embodiment, the cross-section of the first cavity is generally rectangular shaped with a width that is more than 5 times higher, preferably 10 times higher, than the height. The width is meant to be measured parallel to the longitudinal axis of the spindle and the height is meant to be measures perpendicularly to the axial direction.

According to a preferred embodiment, the cross-section of the first cavity is generally rectangular shaped with a width that is comprised between 1mm and 8mm, preferably between 1mm and 5mm, and/or a height that is comprised between 0.1mm and 1mm, preferably between 0.1mm and 0.5mm.

According to a preferred embodiment, the first cavity is in front of a cylindrical internal surface of the body that supports the spindle.

According to a preferred embodiment, the spindle comprises a shoulder axially abutting against a corresponding shoulder of the valve body, the first gasket being positioned between said shoulder of the spindle and said shoulder of the body.

The first gasket preferably has an at least generally rectangular cross-section.

According to a preferred embodiment, the shut-off device comprises a movable closure member housed in the valve body, said member cooperating with a seat around the gas passage in the body, a second cavity of the valve being formed in said member, the spindle engaging with said second cavity for actuating said member.

According to a preferred embodiment, the second cavity widens towards the spindle so as to be able to collect the particles separated from the first gasket while operating the spindle and the shut-off device.

According to a preferred embodiment, the second cavity widens up to the maximum diameter of the shoulder of the spindle.

According to a preferred embodiment, the external surface of the shoulder of the spindle tapers towards the closure member, the internal surface of second cavity on said member being shaped to conform to the tapering external surface of said shoulder.

According to a preferred embodiment, the movable closure member is in threaded engagement with the body, and the engagement between the spindle and the second cavity is in rotation. The spindle and the second cavity can slide relative to each other.

According to a preferred embodiment, the second cavity extends opposite to the spindle, beyond a proximal end of said spindle in said cavity to create a space for accumulating the particles from the at least one gasket.

According to a preferred embodiment, the body comprises a main portion that houses and guides the movable closure member, and an auxiliary cap portion that is screwed on said main portion and that bears the spindle, the first gasket and/or the second gasket.

According to a preferred embodiment, the auxiliary cap portion comprises a bore portion surrounding the shoulder of the spindle and configured for receiving, when the shut-off device is in an open position, an end of the movable closure element corresponding to the opening of the second cavity.

According to a preferred embodiment, the shoulder of the spindle comprises a surface that extends radially and that contacts the first gasket, said surface being raised at its external portion, and/or the shoulder of the valve body comprises a surface that extends radially and that contacts the first gasket, said surface comprises at least one rib at its external portion that penetrates said gasket.

According to a preferred embodiment, the second gasket cooperates with the cylindrically shaped external surface of the spindle, at an axial position of the spindle that is more distant from the shut-off device than the first gasket.

According to a preferred embodiment, it further comprises: a hand wheel in rotational engagement with the spindle; a sleeve around the spindle between the hand wheel and the second gasket; and resilient biasing means acting between a distal end of the spindle and the hand wheel so as to axially press the hand wheel against the sleeve and thereby press the second gasket.

According to a preferred embodiment, the second gasket is a ring with a generally trapezoid cross-section with the larger base in contact with the spindle and the smaller base in contact with the body.

According to a preferred embodiment, one leg of the trapezoid cross-section of the second gasket is against a corresponding bevelled surface of the body and the other opposite leg of the trapezoid is against a corresponding bevelled surface of the sleeve.

According to a preferred embodiment, the larger base of the trapezoid cross-section of the second gasket comprises a recess, preferably at a middle portion.

According to a preferred embodiment, the resilient biasing means comprises stacked Belleville washers.

According to a preferred embodiment, it comprises a cage housing the resilient biasing means and limiting the compression of said means by the hand wheel.

### Advantages of the invention

The invention is particularly interesting in that its features permit to limit the torque necessary for opening and closing the valve, in particular when used with gases at low temperatures where the gaskets, usually made of elastomer materials, become hard and stiff. This is particularly true for valves which cannot contain any loose lubricant like lubricating oil or grease.

### Brief description of the drawings

Figure 1 is a sectional view of a valve in accordance with the invention.
Figure 2 is a magnified view of the area II in figure 1. Description of an embodiment

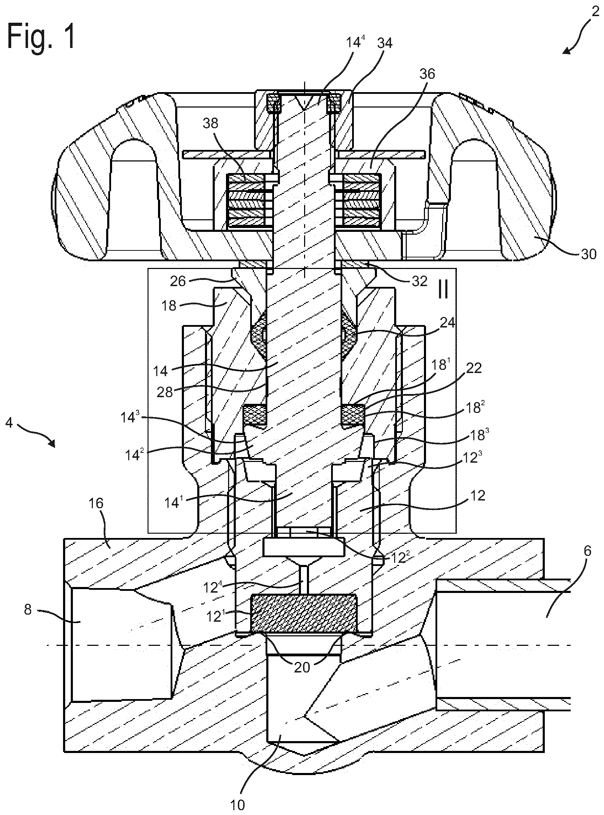

The valve 2 illustrated in figure 1 comprises essentially a body 4, a gas inlet 6, a gas outlet 8 and a gas passage 10 fluidly interconnecting said inlet 6 and outlet 8.

A shut-off device consisting essentially of a movable closure member 12 is provided in the body 4 for closing the gas passage 10. The movable closure member 12 is operated by a spindle 14 extending through the valve body 4.

The valve body 4 is comprised of a main portion 16 and a cap 18 that is attached to the main portion 16, preferably by screwing. The main portion comprises a bore that houses the movable closure member 12, the spindle 14 and the cap 18. The movable closure member 12 is generally cylindrically shaped and comprises at its external surface a male thread that engages a corresponding female thread on an internal surface of the bore of the main portion 16 of the body. It comprises a front surface with a recess housing an element 12¹ of softer material that cooperates in a tightly fashion with a valve seat 20 that is formed in the valve body 4 around the gas passage 10. The element 12¹ can be made of plastic material.

The movable closure member 12 comprises also a cavity 12² that opens in a direction that is opposite to the element 12¹ and the valve seat 20. This cavity 12² comprises a cylindrical internal surface that receives and engages in rotation only with a proximal end 14¹ of the spindle 14. The proximal end 14² of the spindle 14 and the internal surface of the cavity 12² of the closure member 12 can take various shapes which are as such well known from the skilled person, e.g. splines or any section that is not symmetrical in rotation.

The spindle 14 comprises a shoulder 14² that cooperates with a corresponding shoulder 18¹ and bore 18² on the cap 18. A generally ring shaped first gasket 22 is housed in the chamber delimited by these two shoulders 14² and 18¹ and the bore 18².

The external surface 14³ of the shoulder 14² of the spindle 14 can be bevelled so as to taper towards the shut-off device 12. The shoulder 14² of the spindle 14 at the maximum diameter of the tapering external surface 14³ closes the chamber that houses the first gasket 22 while keeping a minimal surface of contact between the external surface 14³ of the spindle and the corresponding surface of the bore 18² of the cap 18.

In addition, the cap 18 forms a second bore 18³, larger than the first one bore 18² and positioned in front of the tapering external surface 14³ of the shoulder 14² of the spindle 14. This bore 18³ can receive the raised end 12³ of the movable closure member 12 that is opposed to the valve seat 20.

The cavity 12² in the movable closure member 12 widens towards the spindle 14, thereby forming the raised end 12³. When operating the spindle 14, the frictional forces acting on the first gasket 22 are likely to produce particles of the elastomer material of said gasket. Under the condition that the valve is positioned upwardly as illustrated in figure 1, i.e. with the axis of the spindle generally vertical and with the distal end 14⁴ of the spindle 14 oriented upwardly, the particles separating from the first gasket 22 can fall downwardly by gravity and be collected by the funnel-shaped upper internal surface of the cavity 12². The particles can then pass through the mechanical play between the external surface of the proximal end 14¹ of the spindle 14 and the corresponding internal surface of the movable closure member 12, and then accumulate at the bottom of the cavity 12².

As is visible in figure 1, a passage 12⁴ can be foreseen at the bottom of the cavity 12², interconnecting said cavity with the housing for the element 12¹ cooperating with the valve seat 20.

The valve 2 comprises a second gasket 24 that is ring-shaped and with a trapezoid cross-section. The larger base of the trapezoid cross-section is in contact with the external cylindrical surface of the spindle 14 whereas the smaller base is in contact with the internal surface of the cap 18. A sleeve 26 is slidably provided around the spindle 14 for pressing the second gasket 24.

The spindle 14 comprises at its external surface a groove 28, said groove being between the first gasket 22 and the second gasket 24. The groove forms a cavity that can accumulate particles separated from the gaskets 22 and 24, more particularly from the second gasket 24, similarly to the cavity 12² in the movable closure member 12. The groove 28 can have a generally rectangular cross shape with a width that is larger, preferably at least 5 times larger, and more preferably at least 10 times larger than the height.

The valve 2 comprises a hand wheel 30 that is in rotatable engagement with the distal end 14⁴ of the spindle 14. The hand wheel 30 can slide along the spindle while being in rotatable engagement. To that end the spindle 14 can provide a cross-section with a non-circular outer surface, e.g. a square outer surface, that engages with a corresponding inner surface of the hand wheel 30. A sliding or anti-friction washer 32 can be interposed between the lower surface of the hand wheel 30 and the upper surface of the sleeve 26. A stack of Belleville spring washers 38 is provided around the distal end 14⁴ of the spindle 14, between a nut 34 that is engaged with said distal end, and the hand wheel 30. The spring washers 38 can be housed in an opened housing 36 that is interposed between the nut 34 and the springs 38 and that extends at the lateral surface of the springs up to close to the surface of the hand wheel that is in contact with the spring washers. The spring washers exert a biasing force on the hand wheel that is oriented downward, i.e. in the direction of the valve body so as to transmit that force to the sleeve 26 and to the second gasket 24. The second gasket 24 is thereby constantly under pressure so as to cooperate in a gas tight fashion with the spindle 14. The biasing force of the springs is also transmitted to the spindle 14 by means of the nut 34. The spindle 14 is then biased upwardly, i.e. in a direction opposite to the valve body and that presses the first gasket 22 between the shoulders 14² and 18¹, so as to provide a first gas tight barrier between the spindle 14 and the body 4.

The use of the housing 36 for the resilient biasing means 38 is interesting for it permits to keep the washers in position so as to work properly. It permits also to facilitate the assembly of the valve. Indeed, when tightening the nut 34 in order to pre-stress both first and second gaskets 22 and 24, the nut can be tighten until the housing 36 contacts the hand wheel 30, so as to ensure a minimum and also an adequate pre-stress of the gaskets. Any wear or matting of one or both of the gaskets will be compensated by the biasing force of the pre-stressed resilient means 38.

During operation of the valve, in particular at low and very low temperatures, i.e. less than -100°C, or even less than -150°C, which is typical for liquefied natural gas (LNG), the material of the gaskets 22 and 24 becomes hard and stiff. The contact pressure between the gaskets and the spindle resulting from the mechanical pre-stress and/or the fluid pressure has for effect that the material of the gaskets can be subject to mechanical wear during rotation of the spindle, the wear resulting in the separation of material in small particles or even powder. These particles can accumulate at some places in the valve, in particular between moving parts and non-moving parts, leading to an increase of the operating torque or even a blocking of the valve. The cavity 28 formed on the outer surface of the spindle 14 can accumulate these particles and avoid a blocking of the spindle 14. In case the valve is in an upright position as illustrated in the figure 1, the cavity 28 can collect the particles from the second gasket 24 moving down by gravity. In case the valve would be in another orientation, e.g. with the spindle horizontal or downward, the cavity 28 can collect the particles from the first gasket 22. The cavity 12² formed in the movable closure member 12 permits also to collect the particles from the first gasket 22, in particular when the valve is in an upright position as illustrated in figure 1. The funnel-shaped opening 12³ of the cavity 12² is particularly useful for collecting the particles and prevent them from reaching the threaded engagement between the movable closure member 12 and the body 16.

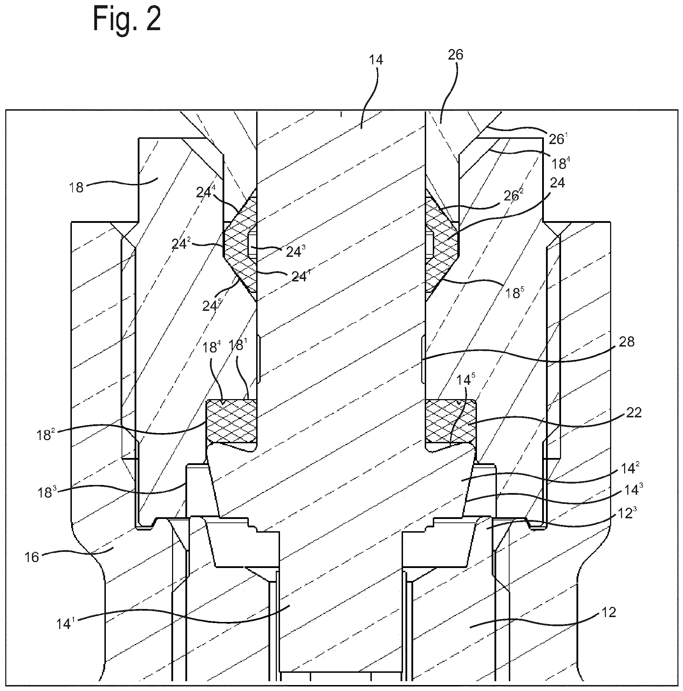

Figure 2 is a magnified view of the area II in figure 1, corresponding to the two gas tight barriers of the valve.

We can observe in figure 2 that the surface 14⁵ of shoulder 14² of the spindle 14 that contacts the first gasket 22 is not flat but rather is slightly bevelled. That surface 14⁵ is shaped so that its external portion is closer to the shoulder 18¹ of the body than its internal portion. The shoulder 18¹ of the body comprises also a circular rib 18⁴ that is intended to penetrate into the first gasket 22. This rib 18⁴ is positioned at an external circumferential portion of the shoulder 18¹ in order to be at least approximately aligned with the raised external portion of the shoulder 14². The gasket 22 is therefore more stressed at its external portion so to be properly penetrated by the rib 18⁴ and provide an adequate first gas tight barrier.

We can also observe in figure 2 that a flared external surface 26¹ of the sleeve 26 that can abut against the corresponding external surface 18⁴ of the plug before the front end 26² contacting the gasket 24 would reach the bottom of the cavity of said gasket.

Still in figure 2 we can observe the shape of the second gasket 24 with a trapezoid cross-section. The larger base 24¹ is in contact with the external surface of the spindle 14 whereas the smaller base 24² is in contact with the internal surface of the plug 18. The larger base 24¹ can comprise a groove 24³ that provides some room for deformation of the gasket. The side or leg 24⁴ is in contact with the corresponding surfaces 26² of the sleeve 26 and the other opposite side or leg 24⁵ is in contact with the corresponding surfaces 18⁵ of the sleeve plug 18. The axial force exerted by the sleeve 26 via its contact surface 26² is converted into a radial force thanks to the inclination of the surfaces 26² and 18⁵.

The different elements of the valve 2, like the main body 16, the plug 18, the spindle 14 and/or the movable closure element 12 can be made of brass, steel and/or stainless steel. Some elements, like the movable closure element 12 and/or the spindle 14 can be coated with Teflon® so as to lower the frictional forces.

## Claims

1. Valve (2) for gas under pressure, in particular at temperatures below -100°C, comprising:
- a body (4) with a gas inlet (6), a gas outlet (8) and a passage (10) connecting said inlet (6) with said outlet (8);
- a shut-off device (12) for closing the gas passage (10);
- a spindle (14) designed for operating the shut-off device (12);
- a first gasket (22) and a second gasket (24),between the spindle (14) and the body (4); and
- a first cavity (28) between the first and second gaskets (22, 24);
**characterized in that**:
the first cavity (28) is shaped as a groove on the external surface of the spindle (14) for accumulating particles separated from the second gasket (24) while operating the spindle (14) and the shut-off device (12), in particular at temperatures below -100°C.

2. Valve (2) according to claim 1, **characterized in that** the cross-section of the first cavity (28) is generally rectangular shaped with a width that is more than 5 times higher, preferably 10 times higher, than the height, the width being measured parallel to the longitudinal axis of the spindle and the height being measured perpendicularly to the axial direction.

3. Valve (2) according to any one of claims 1 and 2, **characterized in that** the cross-section of the first cavity (28) is generally rectangular shaped with a width that is comprised between 1mm and 8mm, preferably between 1mm and 5mm, and/or a height that is comprised between 0.1mm and 1mm, preferably between 0.1mm and 0.5mm.

4. Valve (2) according to any one of claims 1 to 3, **characterized in that** the first cavity (28) is in front of a cylindrical internal surface of the body (4) that supports the spindle (14).

5. Valve (2) according to any one of claims 1 to 4, **characterized in that** the spindle (14) comprises a shoulder (14²) axially abutting against a corresponding shoulder (18¹) of the valve body (4), the first gasket (22) being positioned between said shoulder (14²) of the spindle and said shoulder (18¹) of the body, preferably wherein the shut-off device comprises a movable closure member (12) housed in the valve body (4), said member (12) cooperating with a seat (20) around the gas passage (10) in the body, a second cavity (12²) of the valve being formed in said member (12), the spindle (14) engaging with said second cavity (12²) for actuating said member.

6. Valve (2) according to claim 5, **characterized in that** the second cavity (12²) widens towards the spindle (14) so as to be able to collect the particles separated from the first gasket (22) while operating the spindle (14) and the shut-off device (12), and preferably wherein the second cavity (12²) widens up to the maximum diameter of the shoulder (14²) of the spindle (14).

7. Valve (2) according to any one of claims 5 and 6, **characterized in that** the external surface (14³) of the shoulder (14²) of the spindle (14) tapers towards the movable closure member (12), the internal surface of the second cavity (12², 12³) on said member being shaped to conform to the tapering external surface (14³) of said shoulder (14²).

8. Valve (2) according to any one of claims 5 to 7, **characterized in that** in the movable closure member (12) is in threaded engagement with the body (4), and the engagement between the spindle (14) and the second cavity (12²) is in rotation, preferably wherein the second cavity (12²) extends opposite to the spindle (14), beyond a proximal end (14¹) of said spindle (14) in said cavity (12²) to create a space for accumulating the particles from at least one of the first and second gaskets (22, 24).

9. Valve (2) according to any one of claims 5 to 8, **characterized in that** the body (4) comprises a main portion (16) housing and guiding the movable closure member (12), and an auxiliary cap portion (18) screwed on said main portion (16) and bearing the spindle (14), the first gasket (22) and/or the second gasket (24), preferably wherein the auxiliary cap portion (18) comprises a bore portion (18³) surrounding the shoulder (14²) of the spindle (14) and configured for receiving, when the shut-off device is in an open position, an end (12³) of the movable closure element (12) corresponding to the opening of the second cavity (12²).

10. Valve (2) according to any one of claims 5 to 9, **characterized in that** the shoulder (14²) of the spindle (14) comprises a surface (14⁵) that extends radially and that contacts the first gasket (22), said surface (14⁵) being raised at its external portion, and/or the shoulder (18¹) of the valve body (4) comprises a surface that extends radially and that contacts the first gasket (22), said surface comprising at least one rib (18⁴) at its external portion that penetrates said first gasket (22).

11. Valve (2) according to any one of claims 1 to 10, **characterized in that** the second gasket (24) cooperates with a cylindrically shaped external surface of the spindle (14), at an axial position of the spindle (14) that is more distant from the shut-off device (12) than the first gasket (22).

12. Valve (2) according to claim 11, **characterized in that** it further comprises:
- a hand wheel (30) in rotational engagement with the spindle (14);
- a sleeve (26) around the spindle (14) between the hand wheel (30) and the second gasket (24); and
- resilient biasing means (38) acting between a distal end (14⁴) of the spindle (14) and the hand wheel (30) so as to axially press the hand wheel (30) against the sleeve (26) and thereby press the second gasket (24),
preferably wherein the second gasket (24) is a ring with a generally trapezoid cross-section with the larger base (24¹) in contact with the spindle (14) and the smaller base (24²) in contact with the body (4), and
preferably wherein one leg (24⁵) of the trapezoid cross-section of the second gasket (24) is against a corresponding bevelled surface (18⁵) of the body (4) and the other opposite leg (24⁴) of the trapezoid is against a corresponding bevelled surface (26²) of the sleeve (26).

13. Valve (2) according to claim 12, **characterized in that** the larger base (24¹) of the trapezoid cross-section of the second gasket (24) comprises a recess (24³), preferably at a middle portion.

14. Valve (2) according to any one of claims 12 to 13, **characterized in that** the resilient biasing means (38) comprises stacked Belleville washers.

15. Valve (2) according to any one of claims 12 to 14, **characterized in that** it comprises a cage (36) housing the resilient biasing means (38) and limiting the compression of said means by the hand wheel.

## Patentansprüche

1. Ventil (2) für Gas unter Druck, spezieller auf Temperaturen unter -100°C, umfassend:
- einen Körper (4) mit einem Gaseinlass (6), einem Gasauslass (8) und einem Durchgang (10), der den Einlass (6) mit dem Auslass (8) verbindet;
- eine Absperrvorrichtung (12) zum Verschließen des Gasdurchgangs (10);
- eine zum Bedienen der Absperrvorrichtung (12) ausgelegte Spindel (14);
- eine erste Dichtung (22) und eine zweite Dichtung (24), zwischen der Spindel (14) und dem Körper (4); und
- einen ersten Hohlraum (28) zwischen der ersten und der zweiten Dichtung (22, 24);
**dadurch gekennzeichnet, dass**:
der erste Hohlraum (28) als Nut an der Außenfläche der Spindel (14) geformt ist, zum Sammeln von Partikeln, die von der zweiten Dichtung (24) während des Bedienens der Spindel (14) und der Absperrvorrichtung (12) abgetrennt werden, insbesondere bei Temperaturen unter-100°C.

2. Ventil (2) nach Anspruch 1, **dadurch gekennzeichnet, dass** der Querschnitt des ersten Hohlraums (28) generell rechteckig geformt ist, mit einer Breite, die mehr als 5 Mal höher, bevorzugt 10 Mal höher, als die Höhe ist, wobei die Breite parallel zur Längsachse der Spindel gemessen ist und die Höhe senkrecht zur axialen Richtung gemessen ist.

3. Ventil (2) nach einem der Ansprüche 1 und 2, **dadurch gekennzeichnet, dass** der Querschnitt des ersten Hohlraums (28) generell rechteckig geformt ist, mit einer Breite, die zwischen 1mm und 8mm beträgt, bevorzugt zwischen 1mm und 5mm, und/oder einer Breite, die zwischen 0,1mm und 1mm beträgt, bevorzugt zwischen 0,1mm und 0,5mm.

4. Ventil (2) nach einem der Ansprüche 1 bis 3, **dadurch gekennzeichnet, dass** sich der erste Hohlraum (28) vor einer zylindrischen Innenfläche des Körpers (4), der die Spindel (14) trägt, befindet.

5. Ventil (2) nach einem der Ansprüche 1 bis 4, **dadurch gekennzeichnet, dass** die Spindel (14) eine Schulter (14²) umfasst, die axial gegen eine entsprechende Schulter (18¹) des Ventilkörpers (4) anschlägt, wobei die erste Dichtung (22) zwischen der Schulter (14²) der Spindel und der Schulter (18¹) des Körpers positioniert ist, bevorzugt wobei die Absperrvorrichtung ein bewegbares Schließelement (12) umfasst, das in dem Ventilkörper (4) untergebracht ist, wobei das Element (12) mit einem Sitz (20) um den Gasdurchgang (10) in dem Körper zusammenwirkt, wobei ein zweiter Hohlraum (12²) des Ventils in dem Element (12) ausgebildet ist, wobei die Spindel (14) mit dem zweiten Hohlraum (12²) in Eingriff tritt, um das Element zu betätigen.

6. Ventil (2) nach Anspruch 5, **dadurch gekennzeichnet, dass** sich der zweite Hohlraum (12²) zu der Spindel (14) hin erweitert, sodass er die von der ersten Dichtung (22) während des Betreibens der Spindel (14) und der Absperrvorrichtung (12) abgetrennten Partikel sammeln kann, und bevorzugt wobei sich der zweite Hohlraum (12²) bis zum maximalen Durchmesser der Schulter (14²) der Spindel (14) erweitert.

7. Ventil (2) nach einem der Ansprüche 5 und 6, **dadurch gekennzeichnet, dass** sich die Außenfläche (14³) der Schulter (14²) der Spindel zu dem bewegbaren Schließelement (12) hin verjüngt, wobei die Innenfläche des zweiten Hohlraums (12², 12³) an diesem Element so geformt ist, dass sie konform der sich verjüngenden Außenfläche (14³) der Schulter (14²) ist.

8. Ventil (2) nach einem der Ansprüche 5 bis 7, **dadurch gekennzeichnet, dass** das bewegbare Schließelement (12) in Gewindeeingriff mit dem Körper (4) ist und der Eingriff zwischen der Spindel (14) und dem zweiten Hohlraum (12²) in Rotation ist, bevorzugt wobei sich der zweite Hohlraum (12²) entgegengesetzt zu der Spindel (14) erstreckt, über ein proximales Ende (14¹) der Spindel (14) in dem Hohlraum (12²) hinaus, um einen Raum zum Sammeln der Partikel von mindestens einer der ersten und der zweiten Dichtung (22, 24) zu erzeugen.

9. Ventil (2) nach einem der Ansprüche 5 bis 8, **dadurch gekennzeichnet, dass** der Körper (12) einen Hauptabschnitt (16), der das bewegbare Schließelement (12) aufnimmt und führt, und einen zusätzlichen Kappenabschnitt (18), der auf den Hauptabschnitt (16) geschraubt ist und die Spindel (14), die erste Dichtung (22) und/oder die zweite Dichtung (24) trägt, umfasst, bevorzugt wobei der zusätzliche Kappenabschnitt (18) einen Bohrungsabschnitt (18³) umfasst, der die Schulter (14²) der Spindel (14) umgibt und dafür ausgelegt ist, wenn sich die Absperrvorrichtung in einer offenen Position befindet, ein Ende (12³) des bewegbaren Schließelements (12) aufzunehmen, das der Öffnung des zweiten Hohlraums (12²) entspricht.

10. Ventil (2) nach einem der Ansprüche 5 bis 9, **dadurch gekennzeichnet, dass** die Schulter (14²) der Spindel (14) eine Oberfläche (14⁵) umfasst, die sich radial erstreckt und die mit der ersten Dichtung (22) in Kontakt tritt, wobei diese Oberfläche (14⁵) an ihrem äußeren Abschnitt erhaben ist, und/oder die Schulter (18¹) des Ventilkörpers (4) eine Oberfläche umfasst, die sich radial erstreckt und die mit der ersten Dichtung (22) in Kontakt tritt, wobei die Oberfläche mindestens eine Rippe (18⁴) an ihrem äußeren Abschnitt umfasst, welche die erste Dichtung (22) durchdringt.

11. Ventil (2) nach einem der Ansprüche 1 bis 10, **dadurch gekennzeichnet, dass** die zweite Dichtung (24) mit einer zylindrisch geformten Außenfläche der Spindel (14) zusammenwirkt, an einer axialen Position der Spindel (14), die weiter von der Absperrvorrichtung (12) entfernt ist als die erste Dichtung (22).

12. Ventil (2) nach Anspruch 11, **dadurch gekennzeichnet, dass** es weiter umfasst:
- ein Handrad (30) in Rotationseingriff mit der Spindel (14);
- eine Hülse (26) um die Spindel (14) zwischen dem Handrad (30) und der zweiten Dichtung (24); und
- federnde Vorspannmittel (38), die zwischen einem distalen Ende (14⁴) der Spindel (14) und dem Handrad (30) wirken, um das Handrad (30) axial gegen die Hülse (26) zu pressen und dadurch die zweite Dichtung (24) zu pressen,
bevorzugt wobei die zweite Dichtung (24) ein Ring mit einem generell trapezförmigen Querschnitt ist, wobei die längere Basis (24¹) mit der Spindel (14) in Kontakt ist und die kleinere Basis (24²) mit dem Körper (4) in Kontakt ist, und
bevorzugt wobei sich ein Schenkel (24⁵) des trapezförmigen Querschnitts der zweiten Dichtung (24) gegen eine entsprechende abgeschrägte Oberfläche (18⁵) des Körpers (4) befindet und der andere gegenüberliegende Schenkel (24⁴) des Trapezes sich gegen eine entsprechende abgeschrägte Oberfläche (26²) der Hülse (26) befindet.

13. Ventil (2) nach Anspruch 12, **dadurch gekennzeichnet, dass** die größere Basis (24¹) des trapezförmigen Querschnitts der zweiten Dichtung (24) eine Ausnehmung (24³) umfasst, bevorzugt an einem mittleren Abschnitt.

14. Ventil (2) nach einem der Ansprüche 12 bis 13, **dadurch gekennzeichnet, dass** die federnden Vorspannmittel (38) gestapelte Belleville-Dichtungsringe umfassen.

15. Ventil (2) nach einem der Ansprüche 12 bis 14, **dadurch gekennzeichnet, dass** es einen Käfig (36) umfasst, worin die federnden Vorspannmittel (38) untergebracht sind und der die Kompression dieser Mittel durch das Handrad begrenzt.

## Revendications

1. Soupape (2) pour des gaz sous pression, en particulier à des températures inférieures à -100 °C, comprenant :
- un corps (4) comprenant une entrée (6) pour les gaz, une sortie (8) pour les gaz et un passage (10) reliant ladite entrée (6) à ladite sortie (8) ;
- un dispositif d'obturation (12) pour la fermeture du passage (10) pour les gaz ;
- une tige (14) conçue pour la mise en service du dispositif d'obturation (12) ;
- un premier joint d'étanchéité (22) et un second joint d'étanchéité (24) entre la tige (14) et le corps (4) ; et
- une première cavité (28) entre le premier et le second joint d'étanchéité (22, 24) ;
**caractérisée en ce que** :
la première cavité (28) est configurée sous la forme d'une rainure sur la surface externe de la tige (14), destinée à accumuler des particules séparées du second joint d'étanchéité (24) lors de la mise en service de la tige (14) et du dispositif d'obturation (12), en particulier à des températures inférieures à -100 °C.

2. Soupape (2) selon la revendication 1, **caractérisée en ce que** la section transversale de la première cavité (28) possède une configuration généralement de forme rectangulaire avec une largeur qui est plus de 5 fois supérieure, de préférence plus de 10 fois supérieure à la hauteur, la largeur étant mesurée parallèlement à l'axe longitudinal de la tige et la hauteur étant mesurée perpendiculairement à la direction axiale.

3. Soupape (2) selon l'une quelconque des revendications 1 et 2, **caractérisée en ce que** la section transversale de la première cavité (28) possède une configuration généralement de forme rectangulaire avec une largeur qui est comprise entre 1 mm et 8 mm, de préférence entre 1 mm et 5 mm et/ou une hauteur qui est comprise entre 0,1 mm et 1 mm, de préférence entre 0,1 mm et 0,5 mm.

4. Soupape (2) selon l'une quelconque des revendications 1 à 3, **caractérisée en ce que** la première cavité (28) est disposée en face d'une surface interne cylindrique du corps (4), qui supporte la tige (14).

5. Soupape (2) selon l'une quelconque des revendications 1 à 4, **caractérisée en ce que** la tige (14) comprend un épaulement (14²) qui vient buter, en direction axiale, contre un épaulement correspondant (18¹) du corps de soupape (4), le premier joint d'étanchéité (22) étant disposé entre ledit épaulement (14²) de la tige et ledit épaulement (18¹) du corps ; de préférence, dans laquelle le dispositif d'obturation comprend un élément de fermeture mobile (12) logé dans le corps de soupape (4), ledit élément (12) coopérant avec un siège (20) autour du passage (10) pour les gaz dans le corps, une seconde cavité (12²) de la soupape étant formée dans ledit élément (12), la tige (14) étant en prise avec ladite seconde cavité (12²) pour la mise en service dudit élément.

6. Soupape (2) selon la revendication 5, **caractérisée en ce que** la seconde cavité (12²) s'élargit en direction de la tige (14) de façon à pouvoir récolter les particules séparées du premier joint d'étanchéité (22) lors de la mise en service de la tige (14) et du dispositif d'obturation (12) et, de préférence, dans laquelle la seconde cavité (12²) s'élargit jusqu'à atteindre le diamètre maximal de l'épaulement (14²) de la tige (14).

7. Soupape (2) selon l'une quelconque des revendications 5 et 6, **caractérisée en ce que** la surface externe (14³) de l'épaulement (14²) de la tige (14) se rétrécit en direction de l'élément de fermeture mobile (12), la surface interne de la seconde cavité (12², 12³) sur ledit élément étant configurée pour épouser la configuration de la surface externe se rétrécissant (14³) dudit épaulement (14²).

8. Soupape (2) selon l'une quelconque des revendications 5 à 7, **caractérisée en ce que** l'élément de fermeture mobile (12) entre en prise par filet de vis avec le corps (4), et la prise entre la tige (14) et la seconde cavité (12²) est en rotation ; de préférence, dans laquelle la seconde cavité (12²) s'étend à l'opposé de la tige (14) au-delà d'une extrémité proximale (14¹) de ladite tige (14) dans ladite cavité (12²) dans le but de créer un espace pour l'accumulation des particules à partir d'au moins un joint choisi parmi le premier et le second joint d'étanchéité (22, 24).

9. Soupape (2) selon l'une quelconque des revendications 5 à 8, **caractérisée en ce que** le corps (4) comprend une portion principale (16) dans laquelle vient se loger l'élément de fermeture mobile (12) et qui sert de guidage à ce dernier, et une portion auxiliaire (18) sous la forme d'un couvercle vissé sur ladite portion principale (16) et supportant la tige (14), le premier joint d'étanchéité (22) et/ou le second joint d'étanchéité (24) ; de préférence, dans laquelle la portion auxiliaire (18) sous la forme d'un couvercle comprend une portion (18³) sous la forme d'un alésage entourant l'épaulement (14²) de la tige (14) et configurée pour recevoir, lorsque le dispositif d'obturation se trouve dans une position ouverte, une extrémité (12³) de l'élément de fermeture mobile (12), correspondant à l'ouverture de la seconde cavité (12²).

10. Soupape (2) selon l'une quelconque des revendications 5 à 9, **caractérisée en ce que** l'épaulement (14²) de la tige (14) comprend une surface (14⁵) qui s'étend en direction radiale et qui entre en contact avec le premier joint d'étanchéité (22), ladite surface (14⁵) étant surélevée à sa portion externe, et/ou l'épaulement (18¹) du corps de soupape (4) comprend une surface qui s'étend en direction radiale et qui entre en contact avec le premier joint d'étanchéité (22), ladite surface comprenant au moins une nervure (18⁴) à sa portion externe, qui pénètre dans ledit premier joint d'étanchéité (22).

11. Soupape (2) selon l'une quelconque des revendications 1 à 10, **caractérisée en ce que** le second joint d'étanchéité (24) coopère avec une surface externe de la tige (14), possédant une configuration de forme cylindrique, à une position axiale de la tige (14) qui est plus distante par rapport au dispositif d'obturation (12) que ne l'est le premier joint d'étanchéité (22).

12. Soupape (2) selon la revendication 11, **caractérisée en ce qu'**elle comprend en outre :
- un volant de manoeuvre (30) lié en rotation avec la tige (14) ;
- un manchon (26) autour de la tige (14) entre le volant de manoeuvre (30) et le second joint d'étanchéité (24) ; et
- un moyen résilient de mise en état de précontrainte (38) qui agit entre une extrémité distale (14⁴) de la tige (14) et le volant de manoeuvre (30) de façon à comprimer en direction axiale le volant de manoeuvre (30) contre le manchon (26) et ainsi exercer une pression sur le second joint d'étanchéité (24) :
de préférence, dans lequel le second joint d'étanchéité (24) représente un anneau possédant une section transversale généralement de forme trapézoïdale dont la grande base (24¹) entre en contact avec la tige (14) et la petite base (14²) entre en contact avec le corps (4) ; et
de préférence, dans laquelle une branche (24⁵) de la section transversale de forme trapézoïdale du second joint d'étanchéité (24) est disposée contre une surface biseautée (18⁵) du corps (4) et l'autre branche opposée (24⁴) du trapèze est disposée contre une surface biseautée correspondante (26²) du manchon (26).

13. Soupape (2) selon la revendication 12, **caractérisée en ce que** la grande base (24¹) de la section transversale de configuration trapézoïdale du second joint d'étanchéité (24) comprend un évidement (24³), de préférence à une portion médiane.

14. Soupape (2) selon l'une quelconque des revendications 12 à 13, **caractérisée en ce que** le moyen résilient de mise en état de précontrainte (38) comprend des rondelles Belleville empilées.

15. Soupape (2) selon l'une quelconque des revendications 12 à 14, **caractérisée en ce qu'**elle comprend une cage (36) dans laquelle vient se loger le moyen résilient de mise en état de précontrainte (38) et qui limite la compression dudit moyen via le volant de manoeuvre.
